# EUROPEAN PATENT SPECIFICATION

(11) **EP 1 528 382 B1**
(45) Date of publication and mention of the grant of the patent: **27.01.2010**
(21) Application number: 04105277.0
(22) Date of filing: 25.10.2004
(51) Int. Cl.: G01L 5/00, G01M 13/04

(54) **Combination of bearing housing and load measuring plate**
Kombination von Lagergehäuse und Kraftmessplatte
Combinaison de carter du palier et de plaque de mesure

(30) Priority: 29.10.2003 SE 0302855
(43) Date of publication of application: 04.05.2005
(73) Proprietor: Aktiebolaget SKF, 415 50 Göteborg (SE)
(72) Inventor: Johansson, Peter, SE-412 59, Göteborg (SE); Richarsson, Leif, S-641 96, Katrineholm (SE); Östling, Sture, SE-641 25, Katrineholm (SE)
(74) Representative: Westman, Per Börje Ingemar

(56) References cited:
- US-A- 5 186 061
- US-B1- 6 360 596

## Description

### Background of the invention

The present invention refers to a combination of a bearing housing and a load measuring plate of the type designed as a plate or block positioned between a base and a bearing housing, the load upon which shall be measured. The measuring plate has usually a parallel epipedic structure, and it is armed with transducers producing measurement signals as a result of changes in magnetic fields. Such transducers can e.g. be strain gauges arranged in Wheatstone bridges for measuring the load acting thereon.

A well known load measuring block of this type is armed with Pressductor® transducers manufactured and marketed by ABB AB, and operating with a measurement principle based on the magneto-elastic effect, i.e. the magnetic properties of a material are influenced by the mechanical force applied to it.

There are a number of such load cell configurations and several standard sizes, which are used primarily for roll force measurement in rolling mills, such as circular for installation under the mill screws or hydraulic actuators, rectangular for installation under the lower backup roll chock or annular for installation between the mill stand and nut.

Earlier, such load cells have also been used for measuring the load applied under operation to bearings supporting a shaft, and thereby it has been considered sufficient just to place the load cell or plate under the foot of the bearing housing. Thereby has been chosen a load cell, preferably of rectangular configuration and of a size big enough to allow the foot of the bearing housing to be positioned well inside the outer edges of the load cell.

With bearing housings having a substantially planar outer contour, it has been considered that this combination of a bearing housing foot resting well inside the edges of a load measuring plate, which has a bigger planar contact area against the base than the contact area between load measuring plate and the bearing housing, will give a satisfactory measuring result.

However, in modem bearing technology, the bearing housings have often been designed with a foot member, which has a number of recesses or cavities opening in a direction away from the bearing seat, i.e. downwards. This design reduces the weight of the bearing housing. As the almost shell-like outer contour of the foot part of the bearing housing thereby has become weakened, there is a risk for deformation under influence of high loads, and for that reason the outer walls of the bearing housing foot have been made more stiff by means of reinforcing transverse intermediate walls.

This design means that the earlier used combination of standard load measuring plates and a bearing housing, which has outer contours smaller than that of the load measuring plate, will give a non-secure and unsatisfactory measuring result, as the wall portions of the bearing housing foot contacting the surface of the load measuring plate will be randomly distributed over the load measuring plate, with a measurement result which might be incorrect.

US-B1-6,360,596 discloses a web tension transducer incorporating a pillow block or a bearing housing supporting a shaft, the force acting thereupon being measured by a transducer via an intermediate adaptor plate, where both transducer and adaptor plate have rectangular form with bigger measures than that of the bearing housing. Furthermore nothing in this publication states or intimates that the bearing housing foot member has an outer contour with outer wall portions and transverse intermediate wall portions. The transducer body itself has a very complex form with a planar central upper surface contacting a portion of the adapter plate and with recessed end portions, thus that there is no contact between the end portions and the corresponding parts of the adapter plate. Near a first one of the recessed end portions the transducer body is provided with a vertical slot, leaving a pivot arm between itself and the recessed end portion. Both end portions of the transducer body are in contact with a base and are bolted to this base although the central portion extending between those two end portions is raised from the base, thus that slotted walls are provided adjacent the second one of the recessed end portions, which slotted walls are arranged to flex or bend under influence of a load on the shaft, whereby the tensile strains induced are measured by strain gauges.

Thus the device according to this patent is complex and therefore expensive and it is furthermore not suited to give a reliable result for bearing housings with a foot member having an outer contour with outer wall portions and transverse intermediate wall portions.

US-A-5,186,061 discloses another transducer assembly for a bearing housing incorporating a plate member having clearly larger outer measures than the foot member of the bearing housing. The said plate member is bolted to a top plate member, which in turn is connected to a base plate member via one or more beam members having upper and lower parallel end portions bolted to top plate and base plate respectively, and being interconnected by an inclined middle portion having an inner cavity in which is arranged strain gauges. Also this transducer assembly is complex, due to the large number of interacting components, and the fact that the measures of the foot member of the bearing housing is smaller than that of the interacting three plate members, means that the reliability of the measurement is not secured.

### Purpose and most preferred features of the present invention

The purpose of the present invention is to provide a combination of a bearing housing and a load measuring plate, in which the measurement produces a reliable and secure result independent of the positioning of the outer walls and reinforcing intermediate walls of the bearing housing foot member, and this has been achieved in accordance with the characterizing part of the accompanying claim 1.

### Brief description of the drawings

Hereinafter the invention will be further described with reference to a non-restricting embodiment schematically illustrated in the accompanying drawings.
Fig. 1 shows in a perspective view a bearing housing of a type appropriate for the combination according the invention, as viewed obliquely from the bottom or foot side thereof.
Fig. 2 is a perspective view of a load measuring plate appropriate for combination with the bearing housing shown in Fig. 1.
Fig. 3 is a planar view from above showing the load measuring plate, with certain hidden portions shown in phantom lines, and
Fig. 4 is an side view of the load measuring plate, with certain hidden portions shown in phantom lines.

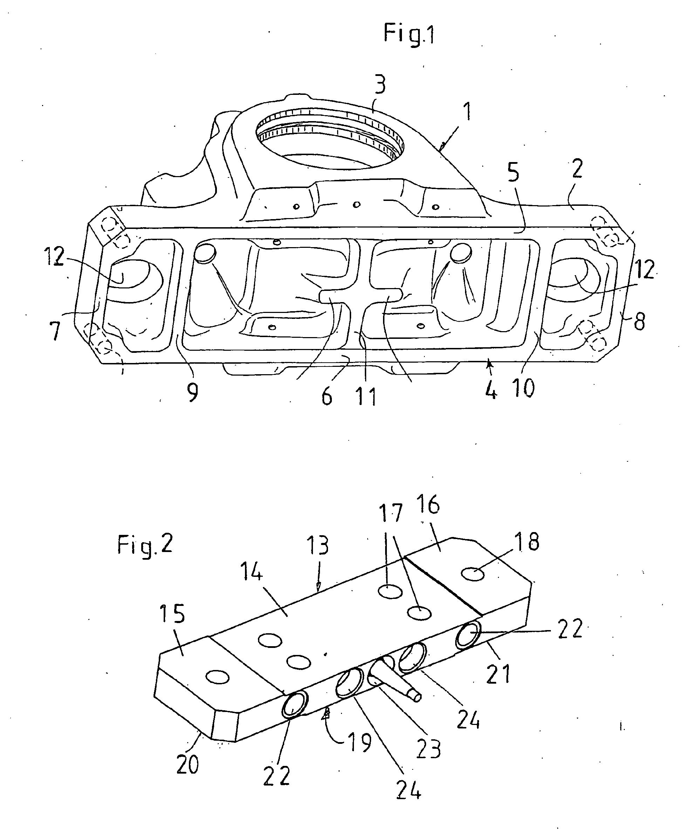

Fig. 1 shows a bearing housing 1 in perspective obliquely from the bottom of the foot member 2, with a tubular main portion 3 facing away from the viewer. The bottom surface of the foot member has a substantially rectangular outer contour 4, although the four comers thereof are bevelled. As can be seen the foot member 2 is substantially shell-formed and has two parallel, thin outer long-side walls 5 and 6 and two parallel thin short-side walls 7, 8 interconnecting the long-side walls 5, 6. For reinforcing the housing base, there are provided transverse wall portions 9, 10, 11 extending between the tubular main body 3 and the long-side walls 5, 6. In the embodiment shown, one of these wall portions 11 is positioned just under the center of the tubular main portion, whereas the other two 9, 10 are situated at a short distance from the adjacent short-side walls. These transverse wall portions 9, 10, 11 are positioned substantially reducing the weight of the bearing housing. The tubular main portion 3, which has an inner, substantially cylindrical seat for accommodating the outer ring of a bearing, is spaced apart from the bottom surface of the foot member 2, thereby leaving spaces opening downwards.
Due to this design of the bottom of the foot member, the load on the bearing housing will be transferred to the surface on which it is positioned, only via the rather thin side walls 5, 6, 7, 8 and the thin transverse walls 9, 10, 11, whereas the areas between these walls inside the outer contour of the foot member will not participate in any transfer of the load. The end sections outside the transverse reinforcing walls 9 and 10 are provided with through-holes 12 for attachment bolts, by which the bearing housing shall be fitted to a base.

Therefore, with the earlier load measuring blocks, e.g. of the Pressductor® transducer type, and where the contact surface of a bearing housing foot member of the type described is limited, there will be a random coincidence between the load transferring areas of the bearing housing and the load receiving areas of these earlier load measuring blocks, which means that the result of the measurement will be very much dependent of the mutual positioning of the two components in relation to each other.

Fig. 2 shows in a perspective view a load measuring plate 13 adapted to the bearing housing foot member of the type shown in and described in connection with Fig. 1, and as can be seen, this load measuring plate has a substantially parallel-epipedic shape with an outer contour, closely adapted to the contour of the foot member 4 of the bearing housing 1. Thus the size and the shape of the load measuring plate 13 is closely adapted to that of the bearing housing foot member.

Thus the upper surface 14 of the load measuring plate 13 has a size and shape carefully corresponding to that of the foot member of the bearing housing, which foot member 2 is positioned on the surface 14 of the load measuring plate 13. As can be clearly seen in this Fig. 2 the load measuring plate 13 has also the same bevelled side comers as the bearing housing foot member.

The upper side surface 14 of the load measuring plate 13 is not planar but has slightly raised end portions 15, 16, which means that the foot member 4 of the bearing housing will rest on the load measuring plate 13 only at these raised end portions 15, 16 of the load measuring plate. The part of the load measuring plate 13 situated between these end portions 15 and 16 has a number of through holes 17 for coupling members, e.g. bolts, for attaching the load measuring plate 13 to a base. The end portions 15, 16 further have one through-hole 18 each, which through-holes 18 are intended to receive bolts which shall pass through the through-openings 12 in the bearing housing foot member, and thereby attach the bearing housing to the load measuring plate 13.

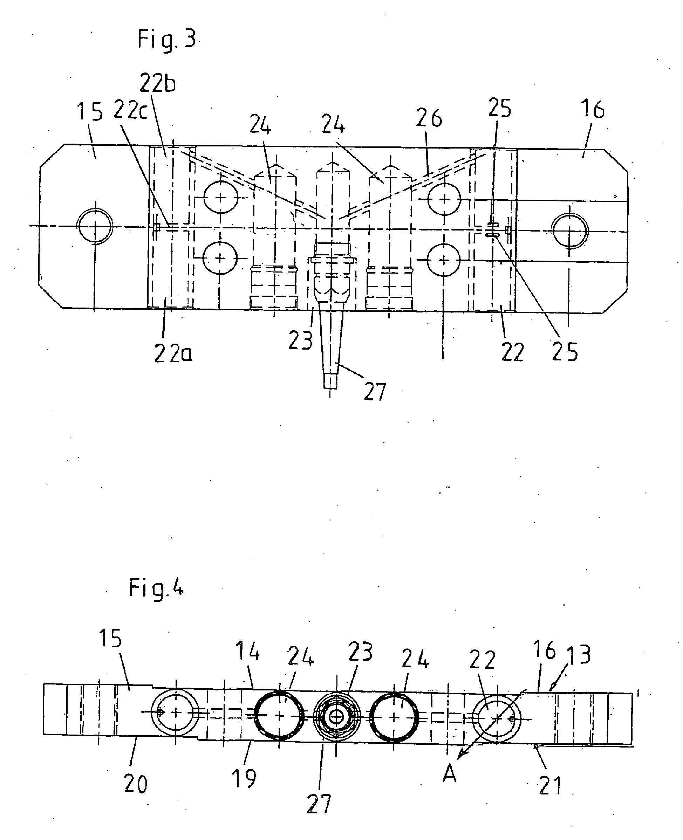

The lower side surface 19 of the load measuring plate 13, which is better visible in Fig. 4, has a shape which is not planar, but has lower end portions 20, 21, which are slightly raised above the surface positioned between them. The length of the lower end portions 20, 21 is bigger than that of the upper end portions 15, 16, thus that the load by which the bearing housing will act upon the load measuring plate 13, will act as forces attacking the upper end portions 15, 16, and being transferred to strain acting in the direction of the arrow A shown in Fig. 4.

In the areas between each of the upper raised end portions 15, 16 and their associated lower end portions 20 and 21, respectively, there is provided one chamber 22 each extending substantially perpendicularly to the longitudinal direction of the load measuring plate. The further shape and function thereof will be further described with reference to Fig. 3

The load measuring plate 13 has at least one, or as shown three additional chambers or openings 23, 24, which also will be further described in connection to Fig. 3.

Fig. 3 shows in a view from above the load measuring plate 13, with parts not visible shown in broken lines. From this view it can be seen that each one of the two chambers 22, is two bottom holes 22a, 22b separated by an intermediate wall 22c. On each side of these intermediate walls is attached a strain measurement device, intimated as 25, and which for instance can each be designed as strain gauges arranged in form of a Wheatstone bridge. The additional chambers 23, 24 are made as bottom holes extending into the plate, and being in communication with the chambers 22, via channels 26. These channels 26 are intended to contain conduits arranged to feed electric power to the strain measurement devices 25 and to transfer signals representative for the current measurement to not further shown output cables. The electric power can be supplied via a socket 27, inserted in the chamber 23, and the not shown conduits arranged in the additional chambers 24 can lead the output signals to an external, not shown, signal processor and/or recorder. Alternatively both power supply and measurement signals can be arranged via only one chamber 23.

In Fig. 4 is shown a side view of the load measuring plate 13, where it can be clearly seen how the upper end portions 15, 16 and the lower end portions 20, 21 are displaced so much from each other that there will be a resulting bending force applied to the area where the strain measurement devices are positioned in the chambers 22, thereby ensuring that the strain caused by the current load exerted by the bearing housing on the load measuring plate, is positively applied in the positions of the load measuring devices.

The invention is not limited to the embodiments illustrated and described, but modifications and variants are possible within the scope of the accompanying claims.

## Claims

1. A combination of a bearing housing and a load measuring plate, which bearing housing (1) is of the type having a foot member (2) with a substantially rectangular outer contour (4) and with outer wall portions (5, 6, 7, 8) and transverse intermediate wall portions (9, 10) forming a planar overall contact surface to be in contact with, and resting upon a load measuring plate (13), which is internally equipped with load measuring devices (25), wherein the outer contour of the load measuring plate (13) is closely adapted to the outer contour (4) of the bearing housing foot member (2),
**characterized therein,**
that the load measuring plate (13) has an upper surface (14) and a lower surface (19), where the upper surface is provided with raised end portions (15, 16) projecting above the upper surface (14), and where the lower surface (19) has end portions (20, 21), which are positioned above the rest of the lower surface, and wherein the distance of the raised end portions (15, 16) from the outer edge of the load measuring plate is shorter than the corresponding distance of the end portions (20, 21) of the lower surface, thereby creating oblique measurement planes (A) in the load measuring plates(13).

2. A combination as claimed in claim 1,
**characterized therein,**
that the load measuring devices (25) are equipped with strain measurement means, arranged to measure strain along said measurement planes (A).

3. A combination as claimed in claim 1 or 2,
**characterized therein,**
that the bearing housing foot member (2) is provided with attachment holes (12) for bolts aligned with corresponding holes (18) in the load measuring plate (13), for ensuring that the bearing housing (1) is positioned in a correct relation to the load measuring plate (13).

4. A combination as claimed in anyone of the preceding claims,
**characterized therein,**
that the load measuring plate (13) is provided with chambers (22) extending substantially in parallel to the upper surface (14) and the lower surface (19) of the load measuring plate (13) and between these surfaces in a direction perpendicular to the longitudinal direction of the load measuring plate, and each one of which chambers is designed as two bottom holes (22a, 22b) with a thin intermediate separating wall (22c), and that the load measuring devices (25) are provided on both sides of this intermediate wall (22c) in the opposed chamber parts (22a, 22b).

5. A combination as claimed in claim 4,
**characterized therein**
that the intermediate wall (22c) is positioned in the said measurement plane (A).

6. A combination as claimed in anyone of claims 2 - 5,
**characterized therein**
that the strain measurement device (25) is formed as strain gauges arranged in a Wheatstone bridge.

## Patentansprüche

1. Kombination aus einem Lagergehäuse und einer Lastmessplatte, wobei das Lagergehäuse (1) von einer Art ist, die einen Fußteil (2) mit einer im wesentlichen rechteckigen äußeren Kontur (4) sowie mit Außenwandabschnitten (5, 6, 7, 8) und transversalen Zwischenwandabschnitten (9, 10) besitzt, die eine ebene Gesamtkontaktfläche dazu bilden, in Kontakt mit einer Lastmessplatte (13) zu sein und auf dieser zu ruhen, wobei die Lastmessplatte inwendig mit Lastmessvorrichtungen (25) ausgestattet ist und die Außenkontur der Lastmessplatte (13) eng an die Außenkontur (4) des Fußteils (2) des Lagergehäuses angepasst ist, **dadurch gekennzeichnet, dass** die Lastmessplatte (13) eine obere Fläche (14) und eine untere Fläche (19) besitzt, wobei die obere Fläche mit angehobenen Endabschnitten (15, 16) versehen ist, die über die obere Fläche (14) hervorstehen, und die untere Fläche (19) Endabschnitte (20, 21) besitzt, die oberhalb des Rests der unteren Fläche angeordnet sind, und wobei der Abstand der angehobenen Endabschnitte (15, 16) von der Außenkante der Lastmessplatte kleiner als der entsprechende Abstand der Endabschnitte (20, 21) der unteren Fläche ist, wodurch man geneigte Messebenen (A) in der Lastmessplatte (13) schafft.

2. Kombination nach Anspruch 1, **dadurch gekennzeichnet, dass** die Lastmessvorrichtungen (25) mit Dehnungsmessmitteln ausgestattet sind, die angeordnet sind, um eine Dehnung entlang der Messebenen (A) zu messen.

3. Kombination nach Anspruch 1 oder 2, **dadurch gekennzeichnet, dass** der Fußteil (2) des Lagergehäuses mit Befestigungslöchern (12) für Bolzen versehen ist, die mit entsprechenden Löchern (18) in der Lastmessplatte (13) fluchten, um sicherzustellen, dass das Lagergehäuse (1) in korrektem Bezug zu der Lastmessplatte (13) positioniert ist.

4. Kombination nach einem der vorhergehenden Ansprüche, **dadurch gekennzeichnet, dass** die Lastmessplatte (13) mit Kammern (22) versehen ist, die sich im wesentlichen parallel zu der oberen Fläche (14) und der unteren Fläche (19) der Lastmessplatte (13) und zwischen diesen Flächen in einer Richtung senkrecht zu der Längsrichtung der Lastmessplatte erstrecken, wobei jede dieser Kammern mit zwei Sacklöchern (22a, 22b) mit einer dünnen, zwischenliegenden Trennwand (22c) ausgestaltet ist und die Lastmessvorrichtungen (25) auf beiden Seiten dieser Zwischenwand (22c) in den sich gegenüberliegenden Kammerbereichen (22a, 22b) vorgesehen sind.

5. Kombination nach Anspruch 4, **dadurch gekennzeichnet, dass** die Zwischenwand (22c) in der Messebene (A) angeordnet ist.

6. Kombination nach einem der Ansprüche 2 bis 5, **dadurch gekennzeichnet, dass** die Dehnungsmessvorrichtung (25) aus Dehnungsmessstreifen gebildet ist, die in einer Wheatstone-Brücke angeordnet sind.

## Revendications

1. Combinaison d'un carter de palier et d'une plaque de mesure de charge, ledit carter de palier (1) étant du type comportant un élément de pied (2) ayant un contour extérieur sensiblement rectangulaire (4) et des parties de parois extérieures (5, 6, 7, 8) et des parties de parois intermédiaires transversales (9, 10) formant une surface de contact globalement plane destinée à être en contact avec, et reposant sur une plaque de mesure de charge (13), qui est équipée en interne de dispositifs de mesure de charge (25), le contour extérieur de la plaque de mesure de charge (13) étant étroitement adapté au contour extérieur (4) de l'élément de pied (2) du carter de palier,
**caractérisée en ce que** la plaque de mesure de charge (13) comporte une surface supérieure (14) et une surface inférieure (19), la surface supérieure étant pourvue de parties d'extrémités surélevées (15, 16) faisant saillie sur la surface supérieure (14), et la surface inférieure (19) comportant des parties d'extrémités (20, 21) qui sont positionnées au-dessus du reste de la surface inférieure, et où la distance séparant les parties d'extrémités surélevées (15, 16) du bord extérieur de la plaque de mesure de charge est inférieure à la distance correspondante entre les parties d'extrémités (20, 21) de la surface inférieure, créant ainsi des plans de mesure obliques (A) dans la plaque de mesure de charge (13).

2. Combinaison selon la revendication 1, **caractérisée en ce que** les dispositifs de mesure de charge (25) sont équipés de moyens de mesure de déformation, adaptés pour mesurer la déformation le long desdits plans de mesure (A).

3. Combinaison selon la revendication 1 ou 2, **caractérisée en ce que** l'élément de pied (2) du carter de palier est pourvu de trous de fixation (12) pour des boulons, alignés avec des trous correspondants (18) prévus dans la plaque de mesure de charge (13), pour assurer que le carter de palier (1) est correctement positionné par rapport à la plaque de mesure de charge (13).

4. Combinaison selon l'une quelconque des revendications précédentes, **caractérisée en ce que** la plaque de mesure de charge (13) est pourvue de chambres (22) s'étendant sensiblement parallèlement à la surface supérieure (14) et à la surface inférieure (19) de la plaque de mesure de charge (13) et entre ces surfaces dans une direction perpendiculaire à la direction longitudinale de la plaque de mesure de charge, et chacune de ces chambres ayant la forme de deux trous de fond (22a, 22b) avec une mince paroi de séparation intermédiaire (22c), et **en ce que** les dispositifs de mesure de charge (25) sont placés de part et d'autre de cette paroi intermédiaire (22c) dans les parties de chambre opposées (22a, 22b).

5. Combinaison selon la revendication 4, **caractérisée en ce que** la paroi intermédiaire (22c) est positionnée dans ledit plan de mesure (A).

6. Combinaison selon l'une quelconque des revendications 2 à 5, **caractérisée en ce que** le dispositif de mesure de déformation (25) se présente sous la forme de jauges de contrainte agencées en pont de Wheatstone.
